# EUROPEAN PATENT SPECIFICATION

(11) **EP 1 584 658 B1**
(45) Date of publication and mention of the grant of the patent: **21.07.2010**
(21) Application number: 03751285.2
(22) Date of filing: 26.09.2003
(51) Int. Cl.: C08L 75/04, C09J 175/04, C09J 5/02, C09D 5/00

(54) **POLYURETHANE RESIN AQUEOUS DISPERSION, AND AQUEOUS ADHESIVE FOR FOOTWEAR AND AQUEOUS PRIMER COATING AGENT CONTAINING THE SAME**
WÄSSRIGE DISPERSION EINES POLYURETHANHARZES SOWIE DIESE ENTHALTENDE WÄSSRIGER KLEBSTOFF FÜR SCHUHE UND WÄSSRIGE GRUNDIERUNG
DISPERSION AQUEUSE D'UNE RESINE DE POLYURETHANE, COLLE AQUEUSE POUR CHAUSSURE ET AGENT DE REVETEMENT PRIMAIRE AQUEUX LE CONTENANT

(43) Date of publication of application: 12.10.2005
(73) Proprietor: DIC Corporation, Tokyo (JP)
(72) Inventor: KUBA, Kazuo, Sakai-shi, Osaka 593-8326 (JP); KITADA, Mitsuru, Osaka-shi, Osaka 538-0052 (JP)
(74) Representative: Albrecht, Thomas
(86) International application number: PCT/JP2003/012332
(87) International publication number: WO 2005/030873

(56) References cited:
- JP-A- 5 222 288
- JP-A- 5 230 364
- JP-A- 8 120 042
- JP-A- 11 511 774
- US-A- 5 688 356
- US-A- 6 017 998

## Description

### BACKGROUND OF THE INVENTION

### Field of the Invention

The present invention relates to a polyurethane resin aqueous dispersion, which displays excellent adhesion, heat resistance and ease of application, and can be ideally utilized as an aqueous adhesive or an aqueous primer coating agent for a variety of substrates including plastic, leather, rubber, foam, fiber products, paper, glass and metal,.

### Description of the Related Art

Conventionally, substrates formed from plastics such as polyvinyl chloride (PVC), leather, rubber, resin based foams, fiber products, glass or metal have typically been bonded using adhesives containing organic solvents, or so-called solvent based adhesives. For example, in the case of substrates formed from leather or fiber products, which are readily penetrated by ashesives, direct application of the adhesive to the substrate simply results in the adhesive penetrating into the substrate, making it difficult to provide a satisfactory adhesive layer, and consequently, in order to prevent this type of penetration by the resin, a primer coating is first applied as a filler treatment, prior to the application of the adhesive.

In recent years, with the increased awareness of environmental issues, the aforementioned solvent based adhesives and solvent based primer coating agents are being replaced with aqueous adhesives and aqueous primer coating agents, and particularly adhesives and primer coating agents that utilize aqueous solutions or aqueous dispersions of polyurethane resins. When bonding is conducted using one of these aqueous adhesives, processing can be conducted under a variety of different conditions including different production lines and process temperatures, but regardless of the process conditions, ensuring a good level of adhesive strength, both immediately following bonding and in terms of ongoing adhesive strength, is very important.

Dry lamination and wet lamination are representative examples of adhesive process methods using the types of solvent based adhesives or water containing adhesives described above, although in recent years dry lamination has become the principal adhesive process for solvent based adhesives, as it enables efficient removal of the solvent by a drying process using a heat source.

Dry lamination is a method in which an adhesive is applied to the substrates to be bonded, and following a drying step in which organic solvents or water contained within the adhesive are removed, the substrates are laminated together. The properties required of an adhesive used in a dry lamination method are satisfactory melting of the adhesive during the drying step, and the ability to achieve a high level of adhesive strength. In addition, in the case of an aqueous adhesive, the slow drying rate of the water can become problematic, and consequently concentrating the adhesive is essential.

Furthermore, if a substrate with low heat resistance such as an EVA foam or the like is used in a dry lamination method, then in order to prevent heat deformation of the substrate, the drying temperature must be restricted to approximately 50 to 70°C. In such cases, it is extremely important that the adhesive still melts adequately even at these low drying temperatures.

For example, in adhesive processes for shoes, the demand for aqueous primer coating agents and adhesives has become extremely strong in recent years, and the industry is keenly seeking an adhesive that satisfies the conditions described above, although at present, no such adhesive has been found.

In adhesive processes for shoes, the shape of the shoe, and the material of the substrate can vary considerably, and consequently in most adhesive processes, such as bonding of the sole and the midsole, hand application of the adhesive using a brush is the most commonly employed method. In addition, because of the materials used in the manufacture of shoes, and in order to maximize production efficiency, a dry lamination process is typically used.

In such cases, the adhesive must have an adequate tack time (also called the "open time"), during which adhesiveness is retained, from the time the adhesive is first applied to each of the materials of the shoe, until the materials are laminated together and crimped, and should also display excellent ease of application by brush application or the like.

Furthermore, another extremely important property is the generation of a high adhesive strength immediately following lamination, namely, a superior level of initial adhesion. If this initial adhesion is insufficient, then for example in the case of a substrate with a curved shape, the bond may be insufficient to withstand the restoring force of the substrate, resulting in the bonded section separating.

In addition, the adhesive must display superior heat resistance and durability such as resistance to hydrolysis, so that the shoes produced as the final product following the adhesive processes are capable of retaining their high level of adhesive strength even if exposed to conditions of high temperature during transport or storage.

As described above, adhesive processes for shoes require an adhesive that exhibits superior performance across a large number of properties, namely, ease of application, tack time, satisfactory melting of the adhesive even under low temperature drying conditions of approximately 50 to 70°C, initial adhesion immediately following lamination, and heat resistance.

Achieving good melting at low temperature, and obtaining a high level of adhesive strength immediately following lamination (initial adhesion) tend to be opposing properties in the design of an adhesive, and achieving both properties is extremely difficult.

For example, a method of producing a polyurethane resin aqueous dispersion comprising a urethane prepolymer with isocyanate groups at the terminals, a dispersant, and water, wherein the dispersant utilizes a hydrophilic urethane prepolymer with ethylene oxide units, a hydroxyl value of 10 to 130, and terminal isocyanate groups, has already been disclosed (see the patent reference 1 below).

However, the polyurethane resin dispersion obtained through this production method requires a hydrophilic urethane prepolymer with a very high ethylene oxide content of 40 to 98% by weight. Accordingly, when an attempt was made to use the polyurethane resin dispersion as an aqueous adhesive, if the resin solid fraction was increased to approximately 40% by weight in order to achieve the desired level of adhesive strength, the aqueous adhesive showed a considerable increase in viscosity and a marked deterioration in the ease of application, making practical application difficult.

In addition, following bonding, the resistance to peeling in the presence of water deteriorated markedly, and both the water resistance and the adhesive strength were unable to satisfy the levels required for an aqueous adhesive.

Furthermore, a method of producing a polyurethane aqueous dispersion by dispersing an essentially water insoluble urethane prepolymer with terminal isocyanate groups in water in the presence of a self-emulsifying water soluble polyurethane, and then adding a chain extender and reacting it with the dispersion has also been disclosed (see the patent reference 2 below).

However, if the various polyurethane aqueous dispersions obtained from the variety of specific production methods disclosed in this reference are used as adhesives within a dry lamination process, then every dispersion displays unsatisfactory adhesive strength immediately following lamination, and suffers from peeling of the bonded sections in those cases where the substrate being bonded is a curved shape.

US-A-6 017 998 discloses aqueous polyurethane dispersions useful as adhesives in the manufacture of footwear (see column 3 lines 18-23 of D1). According to the examples 7-6 and 7-7 of D1, a mixture 50/50 by weight of:
- a) an anionic group-containing aqueous polyurethane dispersion (an aqueous sulfonated polyurethane dispersion) and
- b) a straight chain polyurethane resin, prepared from the reaction between a polyhexamethylene adipate and a diisocyanate
was prepared.

However, such coatings do not provide sufficient initial adhesion.

As stated above, an aqueous adhesive or aqueous primer coating agent that exhibits superior performance across a large number of properties, namely, ease of application, tack time, low temperature melting, initial adhesion, and durability is yet to be found.

### (Patent Reference 1)

Japanese Unexamined Patent Application, First Publication No. Sho 58-38723 (from claim 1 of the claims section through to line 14 of the lower left column on page 5)

### (Patent Reference 2)

Japanese Unexamined Patent Application, First Publication No. Hei 2-20511 (from claim 1 of the claims section through to line 12 of the lower left column on page 5)

### SUMMARY OF THE INVENTION

An object of the present invention is to provide a polyurethane resin aqueous dispersion capable of forming an aqueous adhesive and an aqueous primer coating agent, which display excellent ease of application to a variety of substrates, and satisfactory melting of the adhesive even under low temperature conditions of 50 to 70°C, generate a high level of adhesive strength after drying, immediately following lamination, and also display excellent heat resistance following the adhesion process.

As a result of intensive investigations aimed at resolving the issues described above, the inventors of the present invention discovered that by using an aqueous dispersion containing dispersed particles comprising a self-emulsifying polyurethane resin and a hydrophobic resin with a flow start temperature of no more than 60°C, the drying process could be conducted under comparatively low temperature conditions, and because the hydrophobic resin with a low flow start temperature caused the adhesive to plasticize, rapid melting of the adhesive was promoted.

Furthermore, they also discovered that if an anionic group was introduced when imparting hydrophilicity to the polyurethane resin to achieve water dispersibility, then even when the aqueous dispersion was concentrated in order to obtain superior adhesive strength and low temperature drying properties, the dispersion did not display a considerable increase in viscosity, as was observed on introduction of a non-ionic group, and a dispersion with good ease of application was obtained.

Using this method, the inventors were able to enhance the molten characteristics of the adhesive under low temperature drying conditions, although an accompanying problem arose in that the adhesive strength immediately following lamination of the substrates deteriorated. However, upon further investigation it became clear that the crystallization speed of the aforementioned hydrophobic resin had a large effect on the adhesive strength immediately following substrate lamination. In other words, the inventors discovered that by selecting a hydrophobic resin with a flow start temperature of no more than 60°C, which when cooled from a molten state crystallized at a high temperature, the crystallization speed of the complex between the aforementioned hydrophilic polyurethane resin and the hydrophobic resin improves, enabling a high level of adhesive strength to be exhibited from immediately after lamination, thereby providing superior initial adhesion, and they were thus able to complete the present invention.

In other words, the present invention provides a polyurethane resin aqueous dispersion comprising: dispersion particles incorporating a self-emulsifying polyurethane resin (A) with an anionic group, and a hydrophobic resin (B) with a flow start temperature (X) of no more than 60°C and a crystallization temperature (Y) within a range from 0 to 50°C; and an aqueous medium.

The content of ionic groups within the hydrophobic resin (B) is preferably no more than 50 mmol/kg, and the content of ethylene oxide structural units with at least 5 repeating units [(CH₂CH₂O)ₙ; n≥5] is preferably no more than 5% by weight of the resin.

Furthermore, the present invention also provides an aqueous adhesive comprising the polyurethane resin aqueous dispersion described above.

In addition, the present invention also provides an aqueous primer coating agent comprising the polyurethane resin aqueous dispersion described above.

In the present invention, the aforementioned term "flow start temperature (X)" is measured in a flow tester using a dried film of the resin as a sample. The sample is held at 40°C for 10 minutes, and using a die with dimensions of 1 mm diameter x 1 mm length and under a loading of 10 kg, the temperature is then raised at a rate of 3°C/minute, and following an initial slight rise of the piston due to thermal expansion of the sample, the temperature when the piston noticeably starts to descend is deemed the flow start temperature (°C).

In this specification, the flow start temperature (X) values were measured using a CFT-500D Capillary Rheometer, manufactured by Shimadzu Corporation, as the flow tester.

In the present invention, the aforementioned term "crystallization temperature (Y)" is also measured using a dried film of the resin as a sample, by using differential scanning calorimetry (DSC) and conducting measurements under the conditions shown below. The crystallization temperature refers to the apex of the exothermic peak that appears during the cooling process.

### [Differential Scanning Calorimetry Conditions]

Heating process (0°C to 60°C: rate of temperature increase 3°C/minute)
Cooling process (60°C to -20°C: rate of temperature decrease 3°C/minute)
* Hold period between completion of heating process before shifting to cooling process = no more than 1 minute.

In this specification, the crystallization temperature (Y) values were measured using a DSC Q100, manufactured by TA Instruments Inc., as the differential scanning calorimeter.

According to the present invention, a polyurethane resin aqueous dispersion is provided that is capable of forming an aqueous adhesive which displays excellent ease of application to a variety of substrates, good melting characteristics even under low temperature drying conditions, excellent adhesive strength, both immediately following lamination of the dried substrates and in terms of ongoing adhesive strength, and superior heat resistance.

### DETAILED DESCRIPTION OF THE PREFERRED EMBODIMENTS

A polyurethane resin aqueous dispersion of the present invention comprises dispersion particles incorporating a self-emulsifying polyurethane resin (A) with an anionic group, and a hydrophobic resin (B) with a flow start temperature (X) of no more than 60°C and a crystallization temperature (Y) within a range from 0 to 50°C; and an aqueous medium.

Dispersions in which essentially no chemical bonding forms between the polyurethane resin (A) and the hydrophobic resin (B) within the aforementioned dispersion particles provide more satisfactory melting of the adhesive even under low temperature drying conditions, and are able to provide even more superior initial adhesion, and are consequently preferred.

As follows is a description of the self-emulsifying polyurethane resin (A) of the present invention, which comprises an anionic group within the molecule.

The polyurethane resin (A) used in the present invention comprises an anionic group typified by groups such as carboxyl groups, sulfonic acid groups or salts thereof, as a hydrophilic group for imparting water dispersibility to the molecule.

The quantity of the anionic group incorporated within the polyurethane resin (A) displays a strong correlation with the particle size generated when the polyurethane resin (A) is converted to an aqueous dispersion, and the content of the anionic group is preferably adjusted to a value within a range from 50 to 1000 mmol per 1 kg of the polyurethane resin (A). Provided the anionic group quantity falls within this range, good particle dispersion stability can be achieved, with no aggregation or precipitation of the dispersed particles occurring, even on long term storage, and no loss of water resistance.

Known methods can be used for producing this self emulsifying polyurethane resin (A) with an anionic group.

Suitable methods that can be employed include (i) reacting a polyol comprising an anionic group typified by groups such as carboxyl groups, sulfonic acid groups, or salts thereof, with a polyisocyanate, thereby producing a polyurethane resin (A) with an anionic group;
(ii) reacting a polyol and a polyisocyanate as described in (i) above, under conditions wherein the isocyanate groups of the polyisocyanate are present in excess relative to the hydroxyl groups of the polyol, thereby forming a prepolymer comprising isocyanate groups, and then performing a chain extension (an increase in molecular weight) by subsequent reaction with a polyamine or the like, thereby producing a polyurethane resin (A) with an anionic group;
(iii) reacting a polyol with no anionic groups and a polyisocyanate, under conditions wherein the isocyanate groups of the polyisocyanate are present in excess relative to the hydroxyl groups of the polyol, thereby forming a prepolymer comprising isocyanate groups, and then performing a chain extension (an increase in molecular weight) by subsequent reaction with a polyamine comprising an anionic group such as a diaminosulfonate group, thereby producing a polyurethane resin (A) with an anionic group; and
(iv) reacting a polyamine comprising an anionic group such as a diaminosulfonate group, with a polyisocyanate, thereby producing a polyurethane resin (A) with an anionic group.

Furthermore, in those cases in which the polyurethane resin (A) contains a carboxyl group and/or a sulfonic acid group as the anionic group, a good level of water dispersibility can be imparted to the resin by neutralizing either a portion of, or all of, the anionic groups. This neutralization can be conducted using one or more neutralizing agents selected from a group consisting of organic amines such as ammonia, triethylamine, pyridine and morpholine; alkanolamines such as monoethanolamine; and metal basic compounds containing a metal such as Na, K, Li or Ca. The neutralization ratio, reported as the molar ratio of neutralization agent / anionic groups, is preferably within a range from 0.5 to 3.0, and even more preferably from 0.9 to 2.0. Provided the neutralization ratio falls within this range, stable self-emulsifying characteristics can be imparted with no loss in water resistance.

In the methods (i) and (ii) described above, representative examples of polyols with a carboxyl group that can be used as the polyol with an anionic group include 2,2'-dimethylolpropionic acid, 2,2'-dimethylolbutanoic acid, 2,2'-dimethylolbutyric acid, and 2,2'-dimethylolvaleric acid. Furthermore, polyester polyols with carboxyl groups, produced by reacting one of the above polyols containing a carboxyl group with a polycarboxylic acid, can also be used.

Furthermore, in the above methods (i) and (ii), representative examples of polyols with a sulfonic acid group that can be used as the polyol with an anionic group include polyester polyols containing an aromatic sulfonic acid group and/or a salt thereof, produced by reacting a dicarboxylic acid such as 5-sulfoisophthalic acid, sulfoterephthalic acid, 4-sulfophthalic acid, and 5-[4-sulfophenoxy]isophthalic acid, and/or a sulfonate salt, formed from one of the above dicarboxylic acids and at least one material selected from a group consisting of metals ions such as Na, K, Li and Ca, ammonia, diethylamine, and triethylamine, with any of a variety of polyols.

Furthermore, in addition to the polyol containing an anionic group, polyols with a non-ionic group, such as polyalkylene glycols with a number average molecular weight of 300 to 10,000, comprising at least 30% by weight of ethylene oxide repeating units, and also comprising at least one group containing an active hydrogen atom, can also be added. The quantity of this non-ionic group is preferably adjusted so as to be no more than 10% by weight of the total weight of the polyurethane resin (A). Provided the quantity falls within this range, good aqueous dispersion stability can be achieved with no loss in water resistance.

In the production of a polyurethane resin (A) used in the present invention, other high molecular weight polyols or low molecular weight polyols can also be used in addition to the aforementioned polyol comprising an anionic group.

A high molecular weight polyol used in the production of the polyurethane resin (A) preferably has a hydroxyl value within a range from 10 to 350, and even more preferably from 20 to 300.

The term "hydroxyl value" refers to the quantity of potassium hydroxide in mg, required to neutralize the acetic acid bonded to hydroxyl groups when a 1 g sample of the material has been acetylated.

Examples of these types of high molecular weight polyols include polyester polyols, polyether polyols, and polycarbonate polyols, and these high molecular weight polyols can be used singularly, in combinations of two or more different polyols, or as copolymers. From the viewpoints of cost, and achieving superior adhesion to a wide variety of substrates, the high molecular weight polyol should preferably employ mainly polyester polyols.

These polyester polyols can be produced by reaction of a known polycarboxylic acid and/or a reactive derivative thereof, with a known, low molecular weight polyol with a molecular weight of no more than 300, using a conventional reaction method.

Suitable examples of the polycarboxylic acid include aliphatic dicarboxylic acids such as succinic acid, succinic anhydride, adipic acid, pimelic acid, suberic acid, azelaic acid, sebacic acid, dimer acid, maleic anhydride, and fumaric acid; alicyclic dicarboxylic acids such as 1,4-cyclohexanedicarboxylic acid; polycarboxylic acids such as trimellitic acid, pyromellitic acid, cyclohexanetricarboxylic acid, and the acid anhydrides or ester forming derivatives thereof; aromatic dicarboxylic acids such as terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and the acid anhydrides or ester forming derivatives thereof; and aromatic hydroxycarboxylic acids such as p-hydroxybenzoic acid and the ester forming derivatives thereof. These polycarboxylic acid can be used singularly, or in combinations of two or more different compounds.

Furthermore, examples of suitable cyclic esters include ε-caprolactone and γ-valerolactone.

Specific examples of low molecular weight polyols that can be used in the production of the aforementioned polyester polyols include aliphatic diols such as ethylene glycol, propylene glycol, 1,3-propanediol, 1,3-butanediol, 1,4-butanediol, 1,5-pentanediol, 1,6-hexanediol, neopentyl glycol, diethylene glycol, triethylene glycol, tetraethylene glycol, dipropylene glycol, tripropylene glycol, polyethylene glycol, 3-methyl-1,5-pentanediol and 2-butyl-2-ethyl-1,3-propanediol; alicyclic diols such as 1,4-cyclohexanediol, 1,4-cyclohexanedimethanol and hydrogenated bisphenol A; polyols such as bisphenol A, hydroquinone, bishydroxyethoxybenzene and alkylene adducts thereof; and polyols as polyfunctional components such as glycerol, trimethylolpropane and pentaerythritol. These low molecular weight polyols can be used singularly, or in combinations of two or more different compounds.

Furthermore, suitable examples of polyether polyols that can be used for the production of the polyurethane resin (A) include polymers obtained by ring opening polymerization of either one, or a mixture of two or more tricyclic or tetracyclic ether compounds such as ethylene oxide, propylene oxide, butylene oxide, styrene oxide, tetrahydrofuran or epichlorohydrin, in the presence of a compound with an active hydrogen atom (a reactive hydrogen atom).

Specific examples include polyethylene glycol, polypropylene glycol and polytetramethylene glycol, and these can be used either singularly, or in combinations of two or more different compounds.

Furthermore, polyether monools partially blocked with a monoalcohol such as methanol or butanol may also be used, provided their use does not inhibit increases in the molecular weight.

Suitable examples of polycarbonate polyols that can be used in the production of the polyurethane resin (A) include reaction products obtained by reacting a diol such as 1,3-propanediol, 1,4-butanediol, 1,6-hexanediol, diethylene glycol, polyethylene glycol, polypropylene glycol, or polytetramethylene glycol with either a dialkyl carbonate typified by dimethyl carbonate, or a cyclic carbonate typified by ethylene carbonate. These polycarbonate polyols can be used singularly, or in combinations of two or more different compounds.

Suitable examples of low molecular weight polyols that can be used for the production of the polyurethane resin (A) include the same low molecular weight polyols listed above as being suitable for the production of polyester polyols.

In addition, monoalcohols can also be added, provided their addition does not impair the cohesive strength of the polyurethane resin (A). Specific examples of typically representative monoalcohols include monoalcohols with a molecular weight of less than 300 such as methanol, ethanol, n-butanol, isopropanol, and n-hexanol.

In the production of the polyurethane resin (A), either a prepolymer containing an isocyanate group is prepared in advance, and this prepolymer is then reacted with a polyamine to extend the chain length and increase the molecular weight, or alternatively a polyamine and a polyisocyanate can be reacted together. The polyamine used is typically a polyamine with a molecular weight of no more than 300, such as those polyamines listed below.

In other words, suitable polyamines include diamines such as 1,2-diaminoethane, 1,2- or 1,3-diaminopropane, 1,2-, 1,3- or 1,4-diaminobutane, 1,5-diaminopentane, 1,6-diaminohexane, piperazine, N,N'-bis-(2-aminoethyl)piperazine, 1-amino-3-aminomethyl-3,5,5-trimethyl-cyclohexane (isophoronediamine), bis-(4-aminocyclohexyl)methane, bis-(4-amino-3-butylcyclohexyl)methane, 1,2-, 1,3- or 1,4-diaminocyclohexane and 1,3-diaminopropane; polyamines such as diethylenetriamine and triethylenetetramine; hydrazine and hydrazine derivatives such as adipic acid dihydrazide; and diaminosulfonates such as metal salts of N-(2-sulfoethyl)ethylenediamine and 2-(β-aminoalkyl-aminopropionamide)-alkanesulfonates.

In addition, aminoalcohols that combine an amino group and an alcoholic hydroxyl group within a single molecule can also be used. Specific examples include ethanolamine, N-methyldiethanolamine, propanolamine, N-methyldiisopropanolamine, N-ethyldiethyleneamine, N-ethyldiisopropanolamine, aminoethylethanolamine and diethanolamine.

In order to ensure that the durability is not deleteriously affected, the aforementioned polyamine preferably comprises two or more functional groups (amino groups), and either a single polyamine with two or more functional groups can be used, or a combination of two or more different polyamines with an average number of functional groups of two or more can be used.

When the aforementioned prepolymer containing an isocyanate group is subjected to chain extension to increase the molecular weight, the quantity of the polyamine is preferably sufficient to produce an equivalence ratio relative to the quantity of isocyanate groups that falls within a range from 0.1 to 1.9, and even more preferably from 0.5 to 1.9, and most preferably from 0.6 to 1.0. Provided chain extension is performed with a polyamine with a molecular weight of no more than 300, and using a quantity of polyamine that falls within the above range, a favorable molecular weight increase can be achieved, ensuring excellent durability and light resistance. However, a polyamine need not necessarily be used.

The production of the polyurethane resin (A) described above can utilize a known polyisocyanate compound.

Suitable examples include 1,4-tetramethylene diisocyanate, 1,6-hexamethylene diisocyanate, 1,12-dodecamethylene diisocyanate, cyclohexane-1,3- or 1,4-diisocyanate, 1-isocyanato-3-isocyanatomethyl-3,5,5-trimethylcyclohexane (also known as isophorone diisocyanate or IPDI), bis-(4-isocyanatocyclohexyl)methane (also known as hydrogenated MDI), 2- or 4-isocyanatocyclohexyl-2'-isocyanatocyclohexylmethane, 1,3-or 1,4-bis(isocyanatomethyl)-cyclohexane, bis-(4-isocyanato-3-methylcyclohexyl)methane, 1,3- or 1,4-α,α,α',α'-tetramethylxylylene diisocyanate, 2,4- or 2,6-diisocyanatotoluene, 2,2'-, 2,4'- or 4,4'-diisocyanatodiphenylmethane (MDI), 1,5-naphthalene diisocyanate, p- or m-phenylene diisocyanate, xylylene diisocyanate and diphenyl-4,4'-diisocyanate.

Of these compounds, from the viewpoint of mechanical strength, aromatic diisocyanates are preferred, and from the viewpoints of durability and light resistance, aliphatic or alicyclic diisocyanates are preferred.

The isocyanate group content within the polyurethane resin (A) is preferably within a range from 8 to 30% by weight. If the isocyanate group content falls within this range, then the cohesive strength of the urethane molecules fall within an ideal range, and a high level of adhesive strength can be achieved.

Next is a description of the hydrophobic resin (B) used in the present invention.

The aforementioned hydrophobic resin (B) has a flow start temperature (X) of no more than 60°C and a crystallization temperature (Y) of 0 to 50°C, and together with the polyurethane resin (A), makes up the dispersion particles within the aqueous medium.

If a hydrophobic resin (B) with a flow start temperature (X) of no more than 60°C is used, then in those cases in which the polyurethane resin aqueous dispersion of the present invention is used as an adhesive or an aqueous primer coating agent, this hydrophobic resin (B) with a low flow start temperature (X) ensures that the adhesive plasticizes, enabling rapid melting of the adhesive, even in a drying process conducted under comparatively low temperature conditions (for example, 50 to 70°C).

Furthermore, if a hydrophobic resin (B) with a crystallization temperature (Y) of 0 to 50°C is used, then in those cases in which the polyurethane resin aqueous dispersion of the present invention is used as an adhesive or an aqueous primer coating agent, when the substrate to which the adhesive or aqueous primer coating agent has been applied is dried under comparatively low temperature conditions (for example, 50 to 70°C) and then laminated, this hydrophobic resin (B) with a relatively high crystallization temperature ensures a rapid crystallization speed for the resin, enabling a high level of adhesive strength to be exhibited from immediately after the lamination.

The temperature at which a resin crystallizes from a molten state under falling temperature conditions fluctuates depending on conditions such as the rate of the temperature decrease. In other words, even if the reported crystallization temperature of the hydrophobic resin (B) is less than room temperature, the aforementioned crystallization temperature (Y) refers to the actual temperature at which crystallization occurs under the specific measurement conditions described above, and in the environment in which the adhesive is actually used, crystallization may occur satisfactorily at temperatures above room temperature.

A hydrophobic resin (B) of the present invention is a resin that either contains no hydrophilic groups or hydrophilic structural units, or contains only small quantities of such hydrophilic structures, and preferred resins include those that satisfy both of the following two conditions: namely, (1) an ionic group content of no more than 50 mmol/kg, and (2) a content of ethylene oxide structural units with at least 5 repeating units [(CH₂CH₂O)ₙ; n≥5] of no more than 5% by weight of the resin.

Provided the above conditions are satisfied, the affinity of the resin for water can be lowered, meaning the water resistance of the polyurethane resin aqueous dispersion of the present invention is not deleteriously affected.

The number average molecular weight of the hydrophobic resin (B) is preferably within a range from 1000 to 20,000, and even more preferably from 2,000 to 16,000.

Provided the number average molecular weight and the flow start temperature (X) for the hydrophobic resin (B) fall within the above ranges, the resin film can be satisfactorily melted even in a drying process with comparatively low temperature conditions (for example, 50 to 70°C), the cohesive strength of the resin can be moderated to a suitable value, and a suitable tack time and superior levels of adhesive strength and heat resistance can be achieved.

In this specification, number average molecular weights (Mn) were measured using gel permeation chromatography (GPC) with tetrahydrofuran (THF) as the eluting solvent, and refer to the values determined from a calibration curve created using standard polystyrenes.

The hydrophobic resin (B) in the present invention utilizes a hydrophobic resin with a flow start temperature (X) of no more than 60°C and a crystallization temperature (Y) of 0 to 50°C, and among such compounds, in order to ensure that the effects of the present invention are manifested satisfactorily, one or more essentially straight chain hydrophobic resins selected from a group consisting of aliphatic polyester resins, aliphatic polycarbonate resins, and polyurethane resins are preferred.

Of such resins, from the viewpoints of achieving a favorable adhesion and applicability to a wide range of applications, aliphatic polyester resins (B-PE) and polyurethane resins (B-PU) are preferred as the hydrophobic resin (B), and polyurethane resins (B-PU) are particularly preferred, because if solely polyurethanes (B-PU) are used, then in those cases in which the polyurethane resin aqueous dispersion of the present invention is used as an adhesive or an aqueous primer coating agent, the maximum cohesive strength can be achieved, enabling a high level of adhesive strength to be generated.

A polyurethane resin (B-PU) used as the hydrophobic resin (B) of the present invention is preferably an essentially straight chain polyurethane resin (B-PU) obtained by reaction, using conventional methods, of a straight chain aliphatic polyol (b-5) and a diisocyanate (b-6).

The straight chain aliphatic polyol (b-5) can utilize a straight chain aliphatic polyester polyol or an aforementioned straight chain aliphatic polycarbonate (B-PC) with hydroxyl groups at the molecular terminals.

A straight chain aliphatic polyester polyol used as the aliphatic polyol (b-5) can utilize a polyester polyol produced by reaction, using conventional methods, of at least one carboxylic acid (b-1) selected from a group consisting of straight chain aliphatic dicarboxylic acids of 2 to 10 carbon atoms and ε-caprolactone, and a straight chain aliphatic diol (b-2) of 2 to 6 carbon atoms.

Examples of the carboxylic acid (b-1) include straight chain (with no side chains) aliphatic dicarboxylic acids typified by succinic acid, succinic anhydride, adipic acid, pimelic acid, suberic acid, azelaic acid and sebacic acid, as well as the cyclic ester ε-caprolactone. These carboxylic acids can be used singularly, or in combinations of two or more different compounds.

Examples of the diol (b-2) include aliphatic diols such as ethylene glycol, 1,3-propanediol, 1,4-butanediol, 1,5-pentanediol, 1,6-hexanediol, diethylene glycol, triethylene glycol, and tetraethylene glycol, and these diols can be used singularly, or in combinations of two or more different compounds.

In this case, the quantity used of the carboxylic acid (b-1) preferably accounts for at least 80 mol%, and even more preferably 90 mol% or greater, of all the polycarboxylic acid used in the production of the straight chain aliphatic polyester polyol. Furthermore, the quantity used of the diol (b-2) preferably accounts for at least 80 mol%, and even more preferably 90 mol% or greater, of all the polyols used in the production of the straight chain aliphatic polyester polyol. Provided these quantities fall within the above ranges, the crystallinity of the aliphatic polyester polyol is favorable, and the crystallinity of the product polyurethane resin (B-PU) is also ideal.

Specific examples of the aforementioned diisocyanate (b-6) include 1,4-tetramethylene diisocyanate, 1,6-hexamethylene diisocyanate, 1,12-dodecamethylene diisocyanate, 2,4-diisocyanatotoluene, and 2,2'-, 2,4'- or 4,4'-diisocyanatodiphenylmethane (MDI).

In the production of the polyurethane resin (B-PU), the aliphatic polyol (b-5) preferably accounts for 60 to 95% by weight, and the diisocyanate (b-6) accounts for 5 to 20% by weight of the reactants. Provided reaction is conducted using quantities that fall within these ranges, the crystallinity of the polyurethane resin is favorable, enabling the crystallization speed to be improved.

Furthermore, during the production of the polyurethane resin (B-PU), other known polyols, polyisocyanates, polyamines, and aminoalcohols can also be used in addition to the aforementioned aliphatic polyol (b-5) and diisocyanate (b-6).

Furthermore, the molecular weight and the flow start temperature of the polyurethane resin (B-PU) can also be controlled by using a monoalcohol of 1 to 20 carbon atoms, and a polyether monool that is partially blocked with a monoalcohol of 1 to 20 carbon atoms during the production of the polyurethane resin (B-PU).

In addition, by conducting the reaction with the equivalence ratio of isocyanate groups / groups containing an active hydrogen atom = less than 1 (namely, excess groups containing an active hydrogen atom relative to isocyanate groups), the molecular weight and the flow start temperature can also be controlled.

By using a polyurethane resin (B-PU) as described above, the melting characteristics of the resin within the dispersed particles that make up the polyurethane resin aqueous dispersion of the present invention can be maximized, the initial adhesion immediately following bonding improves, and moreover following lamination, the improvements in adhesive characteristics associated with crystallization of the polyurethane resin can be realized.

Furthermore, in those cases in which a polyurethane resin (B-PU) is used as the hydrophobic resin (B), using a polyurethane resin that contains basically no residual isocyanate groups is preferred, as it enables the superior properties of the polyurethane resin aqueous dispersion of the present invention to be exhibited effectively, although a polyurethane which contains a small quantity of residual isocyanate groups at the time of production can also be used.

Next is a description of a method of producing a polyurethane resin aqueous dispersion of the present invention.

A polyurethane resin aqueous dispersion of the present invention can be produced using a combination of conventional methods.

Suitable methods include:
a method in which a polyisocyanate and a polyol comprising a carboxyl group and/or a sulfonic acid group are reacted together to generate a polyurethane resin (A) with an anionic group, the thus obtained polyurethane resin (A) and a pre-melted hydrophobic resin (B) are mixed together to produce a uniform melt, neutralization is conducted, and water or an aqueous solution containing an emulsifying agent is then added to the mixture and emulsification and dispersion are performed;
a method in which a polyisocyanate and a polyol comprising a carboxyl group and/or a sulfonic acid group are reacted together, under conditions in which the isocyanate groups of the polyisocyanate are in excess relative to the hydroxyl groups of the polyol, thereby generating a prepolymer with an isocyanate group, the thus obtained prepolymer and a pre-melted hydrophobic resin (B) are mixed together, the mixture is neutralized, water or an aqueous solution containing an emulsifying agent is then added to the mixture and emulsification and dispersion are performed, and a polyamine is then added to the emulsified dispersion to effect a chain extension (an increase in molecular weight) of the prepolymer (thereby generating a polyurethane resin (A)); and
a method in which a polyisocyanate and a polyol are reacted together, under conditions in which the isocyanate groups of the polyisocyanate are in excess relative to the hydroxyl groups of the polyol, thereby generating a prepolymer with an isocyanate group, a chain extension is conducted using a polyamine with an anionic group to form a polyurethane resin (A), the thus obtained polyurethane resin (A) and a pre-melted hydrophobic resin (B) are mixed together, and water or an aqueous solution containing an emulsifying agent is then added to the mixture and emulsification and dispersion are performed.

As follows is a more specific description of examples of the above methods of producing a polyurethane resin aqueous dispersion according to the present invention.

### <Method of Producing a Polyurethane Resin Aqueous Dispersion - Example 1>

In an organic solvent containing no groups with active hydrogen atoms within the molecule, and under conditions including a temperature that is preferably within a range from 30 to 150°C, and even more preferably from 50 to 120°C, an organic polyisocyanate and a polyol are combined using either a one shot method or a multi-step method, with an equivalence ratio between the isocyanate groups (hereafter abbreviated as NCO groups) and the hydroxyl groups (hereafter abbreviated as OH groups) that is preferably NCO groups : OH groups = (3 to 1):1, and even more preferably (2 to 1):1, thereby forming a prepolymer with residual NCO groups.

In this process, by using a polyol comprising a carboxyl group and/or a sulfonic acid group as the polyol raw material, a prepolymer with an anionic group can be produced. The thus obtained prepolymer and a pre-melted hydrophobic resin (B) are mixed together to produce a uniform melt. Particularly in those cases in which a prepolymer comprising a hydrophilic group and a hydrophobic resin (B) are mixed together, it is important that the temperature is maintained at no more than 60°C to prevent the NCO groups from reacting with the groups containing active hydrogen atoms within the hydrophobic resin.

Following subsequent neutralization of the mixture, either water or an aqueous solution containing an emulsifying agent is added to the mixture, either in a dropwise manner or in a series of batches, and emulsification and dispersion are performed. During this process, it is important that the emulsification is conducted at temperatures of no more than 60°C, to suppress any side reactions with water.

An aqueous solution containing an amine compound is then added to the emulsified dispersion with residual NCO groups to effect a chain extension (an increase in molecular weight). In this process, by adjusting the quantity of the amine compound so that the equivalence ratio between the residual NCO groups of the prepolymer and the amine groups (hereafter abbreviated as NH groups) is preferably NCO groups : NH groups = 1 :(0.5 to 1.2), and even more preferably 1 :(0.5 to 1.0), an increase in molecular weight can be achieved, and the durability improves.

Furthermore, if necessary the thus obtained emulsified dispersion can be subjected to desolvation, enabling the production of an aqueous dispersion with minimal toxicity.

### <Method of Producing a Polyurethane Resin Aqueous Dispersion - Example 2>

An organic polyisocyanate and a polyol are combined using either a one shot method or a multi-step method, with an equivalence ratio between the NCO groups and the OH groups that is preferably NCO groups : OH groups = (3 to 1):1, and even more preferably (2 to 1):1, thereby forming a prepolymer with residual NCO groups, which contains no organic solvent. Following completion of the prepolymer preparation, acetone is added to form a prepolymer solution. A diaminosulfonate compound (a diamine comprising a sulfonate group) is then added to the solution to effect a chain extension. The thus obtained polyurethane resin solution and a pre-melted hydrophobic resin (B) are mixed together, and either water or an aqueous solution containing an emulsifying agent is then added to the mixture, either in a dropwise manner or in a series of batches, and emulsification and dispersion are performed. If necessary, the thus obtained emulsified dispersion can be subjected to desolvation, enabling the production of an aqueous dispersion with minimal toxicity.

### <Method of Producing a Polyurethane Resin Aqueous Dispersion - Example 3>

In an organic solvent containing no groups with active hydrogen atoms within the molecule, and under conditions including a temperature that is preferably within a range from 30 to 150°C, and even more preferably from 50 to 120°C, an organic polyisocyanate and a polyol are combined using either a one shot method or a multi-step method, with an equivalence ratio between the NCO groups and the OH groups that is preferably NCO groups : OH groups = (1.1 to 0.9):1, and even more preferably (1.05 to 1):1, and the reaction is allowed to proceed until all residual NCO groups are removed, thereby forming a polyurethane resin solution. In this process, by using a polyol comprising a carboxyl group and/or a sulfonic acid group as the polyol raw material, a polyurethane resin with an anionic group can be produced. The thus obtained polyurethane resin (A) and a pre-melted hydrophobic resin (B) are mixed together to produce a uniform melt, and following neutralization, either water or an aqueous solution containing an emulsifying agent is added to the mixture, either in a dropwise manner or in a series of batches, and emulsification and dispersion are performed. If necessary, the thus obtained emulsified dispersion can be subjected to desolvation, enabling the production of an aqueous dispersion with minimal toxicity.

The relative proportions of the polyurethane resin (A) and the hydrophobic resin (B) used in the present invention, reported as a weight ratio, is preferably within a range from polyurethane resin (A) / hydrophobic resin (B) = 99/1 to 50/50, and even more preferably from 95/5 to 50/50. Provided the combination of the polyurethane resin (A) and the hydrophobic resin (B) falls within this range, stable particles can be formed with no loss of water dispersibility, the cohesive strength of the resin can be maintained at an ideal level, and the initial adhesion improves in those cases where processing is conducted at low temperatures.

The organic solvent used during the production of a polyurethane resin aqueous dispersion of the present invention is preferably an organic solvent with a boiling point of no more than 150°C, as such solvents provide superior micro-particle formation during emulsification, and are easier to remove during residual solvent removal from the polyurethane resin aqueous dispersion.

Specific examples of suitable organic solvents with boiling points of no more than 150°C include benzene, toluene, ethyl acetate, acetone, methyl ethyl ketone, diethyl ether, tetrahydrofuran, methyl acetate, acetonitrile, chloroform, methylene chloride, carbon tetrachloride, 1,2-dichloroethane, 1,1,2-trichloroethane, and tetrachloroethylene, and these solvents can be used singularly, or in combinations of two or more different solvents. Of the above solvents, acetone and methyl ethyl ketone are particularly preferred as they offer excellent solubility of polyurethane resins. In addition, in order to improve the emulsification dispersibility, alcohol solvents such as methanol, ethanol and isopropanol may be used during the emulsification and dispersion process, provided their use does not inhibit increases in molecular weight.

Furthermore, solvents such as N-methyl-2-pyrrolidone, ethyl cellosolve, n-butyl cellosolve, and propylene glycol methyl ether can be used as film forming assistants, provided the quantity of such solvents is restricted to no more than 50% by weight relative to the combined quantity of the polyurethane resin (A) and the hydrophobic resin (B).

As described above, an emulsifying agent may also be used during production of a polyurethane resin aqueous dispersion of the present invention. Examples of suitable emulsifying agents include non-ionic emulsifying agents such as polyoxyethylene polyoxypropylene glycol ethers, polyoxyethylene nonylphenyl ethers, polyoxyethylene octylphenyl ethers, polyoxyethylene laurates, polyoxyethylene alkyl ethers, sorbitan derivatives, and polyoxyethylene polycyclic phenyl ethers; anionic emulsifiers such as alkylbenzenesulfonates and dialkylsuccinate sulfonates; as well as cationic emulsifying agents and amphoteric emulsifying agents.

Of the above emulsifying agents, non-ionic emulsifying agents and/or anionic emulsifying agents are preferred, and the quantity of such emulsifying agents is preferably restricted to no more than 5% by weight, and even more preferably from 0.01 to 5% by weight, relative to the quantity of the polyurethane resin (A). Provided the quantity of the emulsifying agent falls within the above range, stable particles can be formed with no loss of water dispersibility. In those cases where an emulsifying agent is used, the emulsifying agent is preferably added to the polyurethane solution or the prepolymer containing residual isocyanate groups prior to the emulsification and dispersion process, although the emulsifying agent could also be added following completion of the emulsification and dispersion.

In order to ensure superior performance in terms of permeability and ease of application properties such as spreadability, the emulsifying agent content within the polyurethane resin aqueous dispersion of the present invention is preferably adjusted to produce a surface tension for the polyurethane resin aqueous dispersion of no more than 40 mN/m.

In those cases in which an emulsifying agent is used for controlling the surface tension, the quantity of the emulsifying agent is preferably within a range from 0.1 to 5.0% by weight, and even more preferably from 0.1 to 2.0% by weight, relative to the combined quantity of the polyurethane resin (A) and the hydrophobic resin (B). Provided the quantity of the emulsifying agent falls within this range, the surface tension of the polyurethane resin aqueous dispersion of the present invention can be reduced with no loss in water resistance, and the wetting (leveling) properties and the permeation of the dispersion into the substrate improve.

During production of a polyurethane resin aqueous dispersion of the present invention, a urethane formation catalyst may also be used if required. Typical examples of such urethane formation catalysts include various nitrogen-containing compounds such as triethylamine, triethylenediamine and N-methylmorpholine, various metal salts such as potassium acetate, zinc stearate and tin octylate, and various organometallic compounds such as dibutyltin dilaurate.

An aqueous adhesive or aqueous primer coating agent of the present invention comprises a polyurethane resin aqueous dispersion of the present invention as described above, and a polyurethane resin aqueous dispersion of the present invention can actually be used, as is, as either an aqueous adhesive or an aqueous primer coating agent. Furthermore, compositions comprising the same polyurethane resin aqueous dispersion can be used as both an aqueous adhesive and an aqueous primer coating agent.

An aqueous adhesive or aqueous primer coating agent of the present invention may also contain, in addition to the polyurethane resin aqueous dispersion of the present invention, other polyurethane resin aqueous dispersions, or non-polyurethane aqueous dispersions such as SBR latex resins or acrylic emulsions, although the proportion represented by the formula [solid fraction of polyurethane resin aqueous dispersions / total solid fraction x 100] is preferably within a range from 1 to 100% by weight, and even more preferably from 50 to 100% by weight.

In addition, an aqueous adhesive or aqueous primer coating agent of the present invention may also contain other secondary components or additives typically used in aqueous adhesives or aqueous primer coating agents, provided their inclusion does not impair the cohesive strength of the polyurethane resin aqueous dispersion. Suitable examples of these secondary components and additives include plasticizers, tackifiers (such as rosin resin, rosin ester resin, terpene resin, terpene phenol resin, petroleum resin, and coumarone resin), fillers, pigments, thickeners, antifoaming agents, antioxidants, UV absorbers, flame retardants, and preservatives.

A polyurethane resin aqueous dispersion of the present invention can be used as a stand-alone product, or may also include cross linking agents with 2 or more functional groups to further improve the durability such as amino resins, epoxy compounds, aziridine compounds, carbodiimide compounds, oxazoline compounds, or polyisocyanate compounds. Of these compounds, polyisocyanates are preferred, and the quantity added of such compounds is preferably no more than 50% by weight relative to the solid fraction of the polyurethane resin.

Specific examples of suitable polyisocyanate compounds include trimers of polyisocyanates such as 1,4-tetramethylene diisocyanate, 1,6-hexamethylene diisocyanate, 4,4'-diisocyanatodiphenylmethane (MDI), xylylene diisocyanate, and isophorone diisocyanate; as well as compounds with terminal isocyanate groups formed from a polyisocyanate and a low molecular weight active hydrogen compound such as ethylene glycol, 1,3-butylene glycol, 1,4-butylene glycol, polyoxyethylene glycol and long chain higher alcohols.

An aqueous adhesive according to the present invention displays excellent adhesive strength, excellent processing at low temperatures (a low drying temperature), as well as superior adhesion to a wide range of substrates, and excellent heat resistance, and can consequently be used with a wide range of materials including plastics such as polyvinyl chloride (PVC), leather, rubber, foams, fiber products, metal and glass.

Furthermore, an aqueous primer coating agent according to the present invention displays excellent adhesive strength and heat resistance, superior permeation into substrates, and excellent leveling properties, and can consequently be used with a wide range of materials including plastics such as polyvinyl chloride (PVC), leather, rubber, foams, fiber products, metal and glass.

### EXAMPLES

As follows is a description of specifics of the present invention, based on a series of examples. In the following description, unless stated otherwise, the units "parts" and "%" refer to weight referenced values.

The methods used for evaluating the polyurethane resin aqueous dispersions of the present invention are described below.

### [Method of Evaluating Initial Adhesion]

An aqueous adhesive formed from a polyurethane resin aqueous dispersion was applied to two substrates with a brush, and following drying (50°C for 6 minutes), the two substrates were laminated together and then crimped using a rubber roller. After 1 minute, the bonded surfaces were peeled apart by hand, and the nature of the cohesive failure of the adhesive was observed. The degree to which the two layers of adhesive bit into one another was used as an indication of the initial adhesion, which was evaluated against the following standards.

### Substrates used:

1) Polyvinyl chloride (PVC) sheets
2) Vulcanized rubber (SBR) sheets

### Initial Adhesion Evaluation Standards:

A: Upon peeling, the two layers of adhesive separated with threads of adhesive drawn between the two substrates, and no interface separation was observed between the substrates and the adhesive.
B: Upon peeling, the two layers of adhesive separated with threads of adhesive drawn between the two substrates, and partial interface separation was observed between the substrates and the adhesive.
C: Upon peeling, no threads of adhesive were observed, and the substrate and the adhesive separated at the interface therebetween.
D: The substrates separated easily with no feeling of resistance.

### [Method of Evaluating Leveling Properties]

An aqueous adhesive formed from a polyurethane resin aqueous dispersion was applied to a substrate with a brush, in a similar manner to that described above, and the uniformity of the surface of the adhesive was evaluated visually against the following standards.

### Leveling Standards

A: The surface of the adhesive is smooth.
B: The surface of the adhesive is substantially smooth.
C: The surface of the adhesive displays height irregularities.
D: The surface of the adhesive is not smooth, and partial cissing is evident.

### [Method of Evaluating Ease of Brush Application]

An aqueous adhesive formed from a polyurethane resin aqueous dispersion was applied to a substrate using a brush, and the spreadability of the adhesive was evaluated visually against the following standards.

### Ease of Brush Application Standards

A: Light, uniform application achievable.
B: Light, substantially uniform application achievable.
C: Application feels heavy, and achieving a uniform application is difficult.
D: Application is heavy, and uniform application is impossible.

### [Method of Measuring Tack Time]

An aqueous adhesive formed from a polyurethane resin aqueous dispersion was applied to both surfaces of two substrates, and following drying for a predetermined time, the substrates were removed from the dryer, allowed to stand for 1, 3, 4, 7.5 or 10 minutes, and then laminated together and crimped using a rubber roller. A 1.5 kg load was suspended from the substrates at room temperature, and a 30 second creep test (180 degrees) was conducted using a substrate gauge mark separation of 10 cm. Samples in which the entire laminated surfaces (10 cm) separated were failed. The longest stand time that did not result in separation of the entire surface was recorded as the tack time (minutes) for that adhesive.

### [Method of Evaluating Initial Adhesive Strength]

Using a brush, an aqueous adhesive formed from a polyurethane resin aqueous dispersion was applied to two substrates of dimensions 2 mm (thickness) x 20 mm (width) x 300 mm (length), using a coverage rate of 100 g/m², and was then reactivated in a hot-air circulatory dryer at 50°C for 6 minutes. After removal from the dryer, the adhesive surfaces of the substrates were laminated together under pressure from a rubber roller. Two minutes after lamination, the peel strength was measured using a digital force gauge.

### Substrates used:

1) PVC sheets
2) SBR sheets

### [Method of Evaluating Peel Strength over Time]

A laminated test sample was prepared in the same manner as that described for the evaluation of initial adhesive strength, and the peel strength 2 hours after lamination, and 1 day after lamination were evaluated with a tensile tester, by measuring the 180 degree peel strength under conditions including a tensile speed of 100 mm/minute.

### Substrates used:

1) PVC sheets
2) SBR sheets

### [Method of Evaluating Heat Creep Resistance]

A laminated test sample was prepared in the same manner as that described for the evaluation of initial adhesive strength, and was hardened by aging for 3 days at room temperature. A 1 kg weight was suspended from the test sample, which was then placed in a hot-air circulatory dryer at 70°C for 30 minutes to perform a 180 degrees heat creep resistance test. Either the distance (mm) of separation between the 100 mm gauge marks, or the time required till the weight dropped, was measured.

### [Number Average Molecular Weight (Mn)]

The number average molecular weight was measured using gel permeation chromatography (GPC) (measurement apparatus: High speed GPC HLC-8220, manufactured by Tosoh Corporation) with tetrahydrofuran (THF) as the eluting solvent, with the actual value determined from a calibration curve created using standard polystyrenes.

### [Flow Start Temperature (X)]

The flow start temperature was measured in a flow tester (a CFT-500D Capillary Rheometer, manufactured by Shimadzu Corporation) using a dried film of the hydrophobic resin (B) as a sample. The sample was held at 40°C for 10 minutes, and using a die with an internal diameter of 1 mm x a length of 1 mm, and under a loading of 10 kg, the temperature was then raised at a rate of 3°C/minute, and following an initial slight rise of the piston due to thermal expansion of the sample, the temperature when the piston noticeably starts to descend was measured as the flow start temperature (°C).

In a case in which the flow start temperature (X) of the sample is less than 40°C, the sample begins to flow during the initial holding period at 40°C, making the determination of an accurate flow start temperature (X) impossible, and in such a case, the flow start temperature (X) of the sample was simply recorded as "less than 40°C".

### [Crystallization Temperature (Y)]

The crystallization temperature (Y) was measured using a dried film of the resin as a sample, by using differential scanning calorimetry (DSC) (apparatus: DSC Q100, manufactured by TA Instruments Inc.) and conducting measurements under the conditions shown below. The crystallization temperature was determined as the apex of the exothermic peak that appears during the cooling process.
- Heating process (0°C to 60°C: rate of temperature increase 3°C/minute)
- Cooling process (60°C to -20°C: rate of temperature decrease 3°C/minute)
* Hold period between completion of the heating process before shifting to the cooling process = no more than 1 minute.
* If the crystallization temperature (Y) falls below -20°C, then the crystallization speed is very slow, meaning there is a delay in the manifestation of adhesive strength, making the resin unsuited to practical applications. Accordingly, the cooling process was measured from 60°C to -20°C.

### <Reference Example 1> Preparation of a Polyester Polyol (1) containing a Metal Aromatic Sulfonate Group

A reaction vessel equipped with a thermometer, a nitrogen gas inlet and a stirrer was flushed with nitrogen gas, and 1480 parts of dimethyl 5-sulfosodium isophthalate (DMS), 1240 parts of 1,6-hexanediol and 0.5 parts of dibutyltin oxide were placed in the reaction vessel. With the temperature inside the reaction vessel held at 180 to 190°C in order to achieve a column top temperature to 60 to 70°C, an ester interchange reaction was conducted until the acid value of the reaction mixture fell to 1 or lower, and the reaction was then continued at 210°C for a further 2 hours. The reaction mixture was then cooled to 100°C, 2280 parts of ε-caprolactone was added, and a ring-opening polymerization was performed at 180°C for 3 hours, yielding a polyester polyol (1) with a hydroxyl value of 120 and an acid value of 0.3, as shown in Table 1.

**Table 1**

| | | Reference Example 1: Preparation of the Polyester Polyol (1) |
|---|---|---|
| Raw Materials: Composition | | |
| dimethyl 5-sulfosodium isophthalate | (parts) | 1480 |
| 1,6-hexanediol | (parts) | 1240 |
| dibutyltin oxide | (parts) | 0.5 |
| ε-caprolactone | (parts) | 2280 |

| Properties of the polyester polyol (1) | | |
|---|---|---|
| hydroxyl value | (mgKOH/g) | 120 |
| acid value | (mgKOH/g) | 0.3 |
| Theoretical metal sulfonate group content | (mmol/kg) | 1080 |

### <Reference Example 2> Preparation of a Hydrophobic Resin

A polyester polyol (number average molecular weight 2,000, hydroxyl value = 56, acid value = 0.3) obtained by reacting neopentyl glycol with adipic acid was used as a hydrophobic resin (P-2). Measurement of the flow start temperature (X) for this resin revealed a flow start temperature (X) of less than 40°C, whereas measurement of the crystallization temperature (Y) revealed no exothermic peak during the cooling process from 60°C to -20°C, meaning the crystallization temperature (Y) could not be determined.

Polypropylene glycol (number average molecular weight 400, acid value = 0.01) was used as a hydrophobic resin (P-3). Measurement of the flow start temperature (X) for this resin revealed a flow start temperature (X) of less than 40°C, whereas measurement of the crystallization temperature (Y) revealed no exothermic peak during the cooling process from 60°C to -20°C, meaning the crystallization temperature (Y) could not be determined.

100 parts of a polyester polyol (hydroxyl value = 37.4) obtained by reacting 1,4-butylene glycol with adipic acid, and 3 parts of neopentyl glycol were added to 55 parts of methyl ethyl ketone and mixed well until dissolved, and 12 parts of hexamethylene diisocyanate was then added, and reaction was allowed to proceed for 3 hours at 80°C. Subsequently, 28 parts of methyl ethyl ketone was added, the reaction mixture was cooled to 60°C, 10 parts of a polyester (hydroxyl value = 190) obtained by reacting 1,4-butylene glycol with adipic acid was added, and reaction was continued at 80°C until the isocyanate value had fallen to less than 0.1%, thereby yielding a urethane based hydrophobic resin (U-1) with a non-volatile component of 60% and a number average molecular weight of 15,000. Measurement of the flow start temperature (X) and the crystallization temperature (Y) for this resin revealed a flow start temperature (X) of less than 40°C and a crystallization temperature (Y) of 30°C.

100 parts of a polypropylene glycol (hydroxyl value = 56.1) and 3 parts of neopentyl glycol were added to 143 parts of methyl ethyl ketone and mixed well until dissolved, and 112 parts of isophorone diisocyanate (abbreviated as IPDI) was then added, and reaction was conducted at 80°C until the isocyanate value had fallen to less than 0.1 %, thereby yielding a urethane based hydrophobic resin (U-2) with a non-volatile component of 60% and a number average molecular weight of 8,500. Measurement of the flow start temperature (X) for this resin revealed a flow start temperature (X) of less than 40°C, whereas measurement of the crystallization temperature (Y) revealed no exothermic peak during the cooling process from 60°C to -20°C, meaning the crystallization temperature (Y) could not be determined.

### <Example 1>

50 parts of the polyester polyol (1) obtained in the reference example 1 was added to 90 parts of methyl ethyl ketone and mixed well until dissolved, and 55 parts of isophorone diisocyanate (abbreviated as IPDI) was then added, and the reaction was allowed to proceed for 3 hours at 80°C. Subsequently, 150 parts of methyl ethyl ketone (abbreviated as MEK) was added, the reaction mixture was cooled to 60°C, 1 part of neopentyl glycol and 255 parts of a polyester (hydroxyl value = 56.1) obtained by reacting 1,4-butylene glycol with adipic acid were added, and reaction was conducted at 80°C until the isocyanate value had fallen to less than 0.79%, at which point the reaction mixture was cooled to 50°C, yielding a hydrophilic urethane prepolymer. 90 parts of the pre-melted hydrophobic resin (U-1) was added, and the mixture was stirred until homogeneous.

Subsequently, 525 parts of water was added, emulsification dispersion was carried out, and 43.8 parts of a 10% aqueous solution of piperazine (90% equivalence of amine groups relative to the residual isocyanate groups) was added before further emulsification dispersion was conducted. Subjecting the thus obtained emulsion to desolvation yielded an aqueous dispersion with a non-volatile component of 50%. Following thickening of 100 parts of the thus obtained aqueous dispersion by addition of 1 part of a urethane based association-type thickener, an adhesive was prepared by adding 5 parts of a water-dispersible isocyanate cross linking agent CR-60N (a polyisocyanate compound manufactured by Dainippon Ink and Chemicals, Inc.). The overall composition of the adhesive is shown in Table 2.

Subsequently, the thus prepared adhesive was applied with a brush to two PVC sheets and two SBR sheets at a coverage rate of 100 g/m², and the respective adhesive surfaces were then laminated together, and the adhesive performance was evaluated, the adhesive strength and the heat resistance were excellent for both the PVC substrates and the rubber substrates, as shown in Table 4.

### <Example 2>

As shown in Table 2, an aqueous dispersion was prepared by adding 0.7 parts of a sodium diallyl sulfosuccinate (active ingredient 70%) to 100 parts of the aqueous dispersion obtained in the example 1. Using the thus obtained aqueous dispersion, an adhesive was prepared in a similar manner to the example 1, and when the respective adhesive surfaces were laminated together and the adhesive performance was evaluated, the adhesive strength and the heat resistance were excellent for both the PVC substrates and the rubber substrates, as shown in Table 4.

### <Comparative Example 1>

100 parts of an ethylene oxide - propylene oxide copolymer comprising 90% ethylene oxide units (hydroxyl value = 30.2) and 50 parts of a polyester (hydroxyl value = 56.1) obtained by reacting 1,4-butylene glycol with adipic acid were added to 111 parts of methyl ethyl ketone and mixed well until dissolved, 17 parts of isophorone diisocyanate (abbreviated as IPDI) was then added, the reaction was allowed to proceed for 5 hours at 80°C, and when the isocyanate value had fallen to less than 0.74%, the reaction mixture was cooled to 50°C, yielding a hydrophilic urethane prepolymer. 278 parts of the pre-melted hydrophobic resin (U-1) was then added, and the mixture was stirred until homogeneous.

Subsequently, 500 parts of water was added, emulsification dispersion was carried out, and 16.9 parts of a 10% aqueous solution of piperazine (90% equivalence of amine groups relative to the residual isocyanate groups) was added before further emulsification dispersion was conducted. Subjecting the thus obtained emulsion to desolvation yielded an aqueous dispersion with a non-volatile component of 50%. The thus obtained aqueous dispersion displayed a high viscosity, and without adding any thickener, an adhesive was prepared by adding 5 parts of a water-dispersible isocyanate cross linking agent CR-60N (a polyisocyanate compound manufactured by Dainippon Ink and Chemicals, Inc.). When the respective adhesive surfaces were laminated together and the adhesive performance was evaluated, the adhesive strength and the heat resistance were unsatisfactory for both substrates, as shown in Table 4.

### <Comparative Example 2>

As shown in Table 2, with the exception of altering the quantity of the hydrophobic resin (U-1) used in the example 1 to 1116 parts, operations were conducted in a similar manner to the example 1, but the stability of the aqueous dispersion following emulsification was poor, and aggregation of the particles occurred, making evaluation of properties such as the ease of application and the adhesion impossible.

### <Comparative Example 3>

As shown in Table 3, with the exception of not using the hydrophobic resin (U-1) used in the example 1, operations were conducted in a similar manner to the example 1, and yielded an aqueous dispersion with a non-volatile component of 50%. Using the thus obtained aqueous dispersion, an adhesive was prepared in a similar manner to the example 1, and when the respective adhesive surfaces were laminated together and the adhesive performance was evaluated, then as can be seen from Table 5, the adhesive strength and the heat resistance were comparatively good for the PVC substrates, but for the rubber substrates, for which increasing the substrate temperature is difficult, the adhesive strength and the heat resistance were unsatisfactory.

### <Comparative Example 4>

As shown in Table 3, with the exception of replacing the hydrophobic resin (U-1) from the example 1 with the hydrophobic resin (P-2), operations were conducted in a similar manner to the example 1, and yielded an aqueous dispersion with a non-volatile component of 50%. Using the thus obtained aqueous dispersion, an adhesive was prepared in a similar manner to the example 1, and when the respective adhesive surfaces were laminated together and the adhesive performance was evaluated, then as can be seen from Table 5, the ease with which the adhesive was applied to the substrates was good, although because the crystallization and the cohesive strength of the adhesive were inhibited, the adhesive strength and the heat creep resistance were unsatisfactory.

### <Comparative Example 5>

As shown in Table 3, with the exception of replacing the hydrophobic resin (U-1) from the example 1 with the hydrophobic resin (P-3), operations were conducted in a similar manner to the example 1, and yielded an aqueous dispersion with a non-volatile component of 50%. Using the thus obtained aqueous dispersion, an adhesive was prepared in a similar manner to the example 1, and when the respective adhesive surfaces were laminated together and the adhesive performance was evaluated, then as can be seen from Table 5, the ease with which the adhesive was applied to the substrates was good, although because the crystallization and the cohesive strength of the adhesive were inhibited, the adhesive strength and the heat creep resistance were unsatisfactory.

### <Comparative Example 6>

As shown in Table 3, with the exception of replacing the hydrophobic resin (U-1) from the example 1 with the hydrophobic resin (U-2), operations were conducted in a similar manner to the example 1, and yielded an aqueous dispersion with a non-volatile component of 50%. Using the thus obtained aqueous dispersion, an adhesive was prepared in a similar manner to the example 1, and when the respective adhesive surfaces were laminated together and the adhesive performance was evaluated, then as can be seen from Table 5, the ease with which the adhesive was applied to the substrates was good, although because the crystallization and the cohesive strength of the adhesive were inhibited, the adhesive strength and the heat creep resistance were unsatisfactory.

**Table 2**

| Composition | | | | Example 1 | Example 2 | Comparative example 1 | Comparative example 2 |
|---|---|---|---|---|---|---|---|
| Hydrophilic prepolymer composition polyisocyanate component | | | | | | | |
| | IPDI (parts) | | | 55 | 55 | 17 | 55 |
| polyol component | | | | | | | |
| | butylene adipate (Mw=2000) | | (parts) | 255 | 255 | 50 | 255 |
| | neopentyl glycol | | (parts) | 1 | 1 | | 1 |
| | polyester polyol (1) | | (parts) | 50 | 50 | | 50 |
| | EO/PO copolymer (OHV=30.2) | | (parts) | | | 100 | |
| Solvent MEK | | | (parts) | 240 | 240 | 111 | 240 |
| Hydrophilic prepolymer solids | | | (parts) | 361 | 361 | 167 | 361 |
| Hydrophilic prepolymer total | | | (parts) | 601 | 601 | 278 | 601 |
| Hydrophobic resin (B) | | | | | | | |
| polyester hydrophobic resin (P-1) | | | (parts) | | | | |
| polyurethane hydrophobic resin (U-1) | | | (parts) | 150 | 150 | 278 | 1116 |
| | hydrophobic resin (B) | | | | | | |
| | | molecular weight | | 15,000 | 15,000 | 15,000 | 15,000 |
| | | flow start temperature (X) | | less than 40°C | less than 40°C | less than 40°C | less than 40°C |
| | | crystallization temperature (Y) | | 30°C | 30°C | 30°C | 30°C |
| Emulsification - Chain extension process | | | | | | | |
| | water (parts) | | | 525 | 525 | 500 | 1200 |
| 10% aqueous solution of piperazine (parts) | | | | 43.8 | 43.8 | 16.9 | 43.8 |
| Anionic group content (mmol/kg) | | | | 120 | 120 | 0 | 52 |
| Sodium dialkyl sulfosuccinate | | | | | added after | | |
| Surface tension of aqueous dispersion (mN/m) | | | | 45 | 33 | 42 | - |
| Hydrophilic prepolymer / hydrophobic resin (solid fraction ratio) | | | | 80/20 | 80/20 | 50/50 | 35/65 |
| Aqueous dispersion stability | | | | good | good | good viscosity high | gelled |

**Table 3**

| Composition | | | | Comparative example 3 | Comparative example 4 | Comparative example 5 | Comparative example 6 |
|---|---|---|---|---|---|---|---|
| Hydrophilic prepolymer composition | | | | | | | |
| polyisocyanate component | | | | | | | |
| | IPDI (parts) | | | 55 | 55 | 55 | 55 |
| polyol component | | | | | | | |
| | butylene adipate (Mw=2000) | | (parts) | 255 | 255 | 255 | 255 |
| | neopentyl glycol | | (parts) | 1 | 1 | 1 | I |
| | polyester polyol (I) | | (parts) | 50 | 50 | 50 | 50 |
| Solvent MEK (parts) | | | | 240 | 240 | 240 | 240 |
| Hydrophilic prepolymer solids | | | (parts) | 361 | 361 | 361 | 361 |
| Hydrophilic prepolymer total | | | (parts) | 60 | 601 | 601 | 601 |
| Hydrophobic resin (B) | | | | none | | | |
| polyester hydrophobic resin (P-2) | | | (parts) | | 90 | | |
| polyether hydrophobic resin (P-3) | | | (parts) | | | 90 | |
| polyurethane hydrophobic resin (U-2) | | | (parts) | | | | 150 |
| | hydrophobic resin (B) | | | | | | |
| | | molecular weight | | | 2000 | 400 | 8500 |
| | | flow start temperature (X) | | | less than 40°C | less than 40°C | less than 40°C |
| | | crystallization temperature (Y) | | | unconfirmed | unconfirmed | unconfirmed |
| Emulsification - Chain extension process | | | | | | | |
| | water (parts) | | | 525 | 525 | 525 | 525 |
| | 10% aqueous solution of piperazine (parts) | | | 43.8 | . 43.8 | 43.8 | 43.8 |
| Anionic group content (mmol/kg) | | | | 150 | 120 | 120 | 120 |
| Hydrophilic prepolymer / hydrophobic resin (solid fraction ratio) | | | | 100/0 | 80/20 | 80/20 | 80/20 |

| | | | | | | | |
|---|---|---|---|---|---|---|---|
| * Crystallization temperature (Y): unconfirmed - in those cases in which measurement of the crystallization temperature (Y) revealed no exothermic peak during the cooling process from 60°C to -20°C, meaning the crystallization temperature (Y) could not be determined, the value was recorded as "unconfirmed" in the table. | | | | | | | |

**Table 4**

| Results of evaluations of Adhesive properties | | Example 1 | Example 2 | Comparative example 1 | Comparative example 2 |
|---|---|---|---|---|---|
| <Adhesion of PVC to PVC> | | | | | |
| Substrate surface temperature following | | | | | |
| drying = 45°C | | | | | |
| Ease of brush application | | A | A | C | unmeasurable |
| Leveling Properties | | A | A | D | unmeasurable |
| Initial adhesion | | A | A | D | unmeasurable |
| Tack time (minutes) | | 20 | 20 | 20 | unmeasurable |
| Initial adhesive strength | (N/20mm) | 65 | 80 | 5 | unmeasurable |
| Adhesive strength after 2 hrs | (N/20mm) | 90 | 100 | 10 | unmeasurable |
| Adhesive strength after 1 day | (N/20mm) | 110 | 120 | 15 | unmeasurable |
| Heat creep resistance | | 5 mm separation | 2 mm separation | dropped after 5 minutes | unmeasurable |
| <Adhesion of SBR rubber to SBR rubber> | | | | | |
| Substrate surface temperature following | | | | | |
| drying = 40°C | | | | | |
| Ease of brush application | | A | A | C | unmeasurable |
| Leveling Properties | | A | A | D | unmeasurable |
| Initial adhesion | | A | A | D | unmeasurable |
| Tack time | (minutes) | 10 | 10 | 20 | unmeasurable |
| Initial adhesive strength | (N/20mm) | 45 | 50 | 5 | unmeasurable |
| Adhesive strength after 2 hrs | (N/20mm) | 50 | 65 | 5 | unmeasurable |
| Adhesive strength after 1 day | (N/20mm) | 65 | 70 | 10 | unmeasurable |
| Heat creep resistance | | 10 mm separation | 5 mm separation | dropped after 5 minutes | unmeasurable |

**Table 5**

| Results of evaluations of Adhesive properties | | Comparative example 3 | Comparative example 4 | Comparative example 5 | Comparative example 6 |
|---|---|---|---|---|---|
| <Adhesion of PVC to PVC> | | | | | |
| Substrate surface temperature following | | | | | |
| drying = 45°C | | | | | |
| Ease of brush application | | A | A | A | A |
| Leveling Properties | | A | A | A | A |
| Initial adhesion | | B | C | D | D |
| Tack time (minutes) | | 20 | 20 | 20 | 20 |
| Initial adhesive strength | (N/20mm) | 40 | 20 | 15 | 18 |
| Adhesive strength after 2 hrs | (N/20mm) | 50 | 40 | 30 | 35 |
| Adhesive strength after 1 day | (N/20mm) | 75 | 50 | 35 | 55 |
| Heat creep resistance | | 70 mm separation | dropped after 5 minutes | dropped after 5 minutes | dropped after 5 minutes |
| <Adhesion of SBR rubber to SBR rubber> | | | | | |
| Substrate surface temperature following | | | | | |
| drying = 40°C | | | | | |
| Ease of brush application | | A | A | A | A |
| Leveling Properties | | A | A | A | A |
| Initial adhesion | | D | D | D | D |
| Tack time (minutes) | | 5 | 10 | 10 | 10 |
| Initial adhesive strength | (N/20mm) | 15 | 10 | 15 | 20 |
| Adhesive strength after 2 hrs | (N/20mm) | 25 | 15 | 15 | 25 |
| Adhesive strength after 1 day | (N/20mm) | 30 | 30 | 25 | 30 |
| Heat creep resistance | | dropped after 10 minutes | dropped after 5 minutes | dropped after 5 minutes | dropped after 5 minutes |

## Claims

1. A polyurethane resin complex aqueous dispersion comprising: dispersion particles incorporating a complex between a self-emulsifying polyurethane resin (A) with an anionic group, and an essentially straight chain hydrophobic polyurethane resin (B-PU) with a flow start temperature (X) of no more than 60°C, a crystallization temperature (Y) within a range from 0 to 50°Cand a hydrophobic property; and an aqueous medium,
wherein the flow start temperature is measured in a flow tester (a CFT-500D Capillary Rheometer, manufactured by Shimadzu Corporation) using a dried film of the hydrophobic resin (B-PU) as a sample, the sample being held at 40°C for 10 minutes, and using a die with an internal diameter of 1 mm x a length of 1 mm, and under a loading of 10 kg, the temperature being then raised at a rate of 3°C/minute, and following an initial slight rise of the piston due to thermal expansion of the sample, the temperature when the piston noticeably starts to descend being measured as the flow start temperature (°C), and
the crystallization temperature (Y) is measured using a dried film of the resin as a sample, by using differential scanning calorimetry (DSC) (apparatus: DSC Q100, manufactured by TA Instruments Inc.) and conducting measurements under the conditions shown below, the crystallization temperature being determined as the apex of the exothermic peak that appears during the cooling process:
heating process (0°C to 60°C: rate of temperature increase 3°C/minute)
cooling process (60°C to -20°C: rate of temperature decrease 3°C/minute)
a hold period between completion of the heating process before shifting to the cooling process is no more than 1 minute;
wherein a content of ionic groups within said polyurethane resin (B-PU) is no more than 50 mmol/kg, and a content of ethylene oxide structural units with at least 5 repeating units [(CH₂CH₂O)ₙ; n is 5 or more] of the hydrophobic resin is no more than 5% by weight of the resin (B-PU);
wherein the relative proportions of the polyurethane resin (A) and the polyurethane resin (B-PU) is within a range from (A)/(B-PU) = 99/1 to 50/50, and
the polyurethane resin (B-PU) is obtained by a reaction of 60 to 95% by weight of a straight chain aliphatic polyol (b-5) and 5-20% by weight of a diisocyanate (b-6).

2. A polyurethane resin aqueous dispersion according to claim 1, wherein said aliphatic polyol (b-5) is an essentially straight chain polyester polyol produced by reaction of at least one carboxylic acid (b-1) selected from a group consisting of straight chain aliphatic dicarboxylic acids of 2 to 10 carbon atoms and ε-caprolactone, and a straight chain aliphatic diol (b-2) of 2 to 6 carbon atoms.

3. An aqueous dispersion according to claim 1, wherein the surface tension of the dispersion is no more than 40 mN/m.

4. An aqueous adhesive for footwear comprising a polyurethane resin aqueous dispersion according to any one of claim 1 through claim 3.

5. An aqueous primer coating agent comprising a polyurethane resin aqueous dispersion according to any one of claim 1 through claim 3.

## Patentansprüche

1. Wässrige Polyurethanharzkomplexdispersion, umfassend:
Dispersionspartikel, die einen Komplex zwischen einem selbstemulgierenden Polyurethanharz (A) mit einer anionischen Gruppe, und einem im Wesentlichen geradkettigen hydrophoben Polyurethanharz (B-PU) mit einer Flussstarttemperatur (X) von nicht mehr als 60°C, einer Kristallisationstemperatur (Y) in einem Bereich von 0 bis 50°C und einer hydrophoben Eigenschaft einschließen; sowie ein wässriges Medium,
wobei die Start-Flusstemperatur gemessen wird in einem Flusstestgerät (CFT-500D Kapillarrheometer, hergestellt von Shimadzu Corporation) unter Verwendung eines getrockneten Films des hydrophoben Harzes (B-PU) als Probe, wobei die Probe bei 40°C für 10 Minuten gehalten wird, und unter Verwendung einer Düse mit einem inneren Durchmesser von 1 mm x einer Länge von 1 mm, und unter einer Last von 10 kg, wobei die Temperatur dann mit einer Rate von 3°C/Minute erhöht wird und nach einer anfänglichen leichten Anhebung des Stempels aufgrund thermischer Expansion der Probe die Temperatur wenn der Stempel sich merklich abwärts bewegt, als Start-Flusstemperatur (°C) gemessen wird, und
die Kristallisationstemperatur (Y) gemessen wird unter Verwendung eines getrockneten Films des Harzes als Probe, unter Verwendung von Differential-Scanning-Kalorimetrie (DSC) (Gerät: DSC Q100, hergestellt durch TA Instruments Inc.) und Ausführung von Messungen unter den unten gezeigten Bedingungen, wobei die Kristallisationstemperatur als Apex des exothermen Peaks, der während des Kühlvorgangs erscheint, bestimmt wird:
Heizvorgang (0°C bis 60°C: Temperaturzunahmerate 3°C/Minute)
Kühlvorgang (60°C bis -20°C: Temperaturabnahmerate 3°C/Minute)
eine Halteperiode zwischen Vervollständigung des Heizvorgangs, bevor zum Kühlvorgang übergegangen wird, beträgt nicht mehr als 1 Minute;
wobei der Gehalt an ionischen Gruppen innerhalb des Polyurethanharzes (B-PU) nicht mehr als 50 mmol/kg beträgt, und der Gehalt von strukturellen Ethylenoxideinheiten mit mindestens 5 Repetiereinheiten [(CH₂CH₂O)ₙ; n ist 5 oder mehr] des hydrophoben Harzes nicht mehr als 5 Gew.-% des Harzes (B-PU) beträgt;
wobei die relativen Proportionen des Polyurethanharzes (A) und des Polyurethanharzes (B-PU) innerhalb eines Bereichs von (A)/(B-PU) = 99/1 bis 50/50 liegen, und
das Polyurethanharz (B-PU) wird durch eine Reaktion von 60 bis 95 Gew.-% eines geradkettigen aliphatischen Polyols (b-5) und 5 bis 20 Gew.-% eines Diisocyanats (b-6) erhalten.

2. Wässrige Polyurethanharzdispersion gemäß Anspruch 1, wobei das aliphatische Polyol (b-5) ein im Wesentlichen geradkettiges Polyesterpolyol ist, hergestellt durch Reaktion von mindestens einer Carbonsäure (b-1), ausgewählt aus einer Gruppe, bestehend aus geradkettigen aliphatischen Dicarbonsäuren von 2 bis 10 Kohlenstoffatomen und ε-Caprolacton, und einem geradkettigen aliphatischen Diol (b-2) von 2 bis 6 Kohlenstoffatomen.

3. Wässrige Dispersion gemäß Anspruch 1, wobei die Oberflächenspannung der Dispersion nicht mehr als 40 mN/m beträgt.

4. Wässriger Kleber für Schuhwerk, umfassend die wässrige Polyurethanharzdispersion gemäß einem beliebigen der Ansprüche 1 bis 3.

5. Wässriges Primerbeschichtungsmittel, umfassend die wässrige Polyurethanharzdispersion gemäß einem beliebigen der Ansprüche 1 bis 3.

## Revendications

1. Dispersion aqueuse d'un complexe de résines polyuréthanne comprenant : des particules dispersées contenant un complexe entre une résine polyuréthanne auto-émulsionnante (A) ayant un groupe anionique et une résine polyuréthanne hydrophobe à chaîne essentiellement droite (B-PU) ayant une température de début d'écoulement (X) inférieure ou égale à 60 °C, une température de cristallisation (Y) dans une plage de 0 à 50 °C et une propriété hydrophobe ; et un milieu aqueux,
dans laquelle la température de début d'écoulement est mesurée dans un testeur d'écoulement (rhéomètre capillaire CFT-500D, de chez Shimadzu Corporation) en utilisant un film séché de la résine hydrophobe (B-PU) à titre d'échantillon, avec maintien de l'échantillon à 40 °C pendant 10 minutes, et utilisation d'une filière ayant un diamètre intérieur de 1 mm x une longueur de 1 mm, et sous une charge de 10 kg, élévation de la température à une vitesse de 3 °C/minute, puis après une légère montée initiale du piston en raison de la dilatation thermique de l'échantillon, mesure de la température quand le piston commence nettement à descendre à titre de température de début d'écoulement (°C), et
la température de cristallisation (Y) est mesurée en utilisant un film séché de la résine à titre d'échantillon, par analyse calorimétrique différentielle du type à balayage (DSC) (appareil : DSC Q100, de chez TA Instrument Inc.) et prise des mesures dans les conditions indiquées ci-dessous, la température de cristallisation étant déterminée comme le point culminant du pic exothermique qui apparaît pendant le procédé de refroidissement :
procédé de chauffage (0 à 60 °C : vitesse d'élévation de température 3 °C/minute)
procédé de refroidissement (60 à -20 °C : vitesse d'abaissement de température 3 °C/minute)
période de maintien à la fin du procédé de chauffage avant de passer au procédé de refroidissement inférieure ou égale à 1 minute ;
dans laquelle une teneur en groupes ioniques dans ladite résine polyuréthanne (B-PU) est inférieure ou égale à 50 mmol/kg, et une teneur en motifs structuraux d'oxyde d'éthylène comptant au moins 5 motifs répétitifs [(CH₂CH₂O)ₙ ; n valant 5 ou plus] de la résine hydrophobe est inférieure ou égale à 5 % en poids de la résine (B-PU) ;
dans laquelle les proportions relatives de la résine polyuréthanne (A) et de la résine polyuréthanne (B-PU) sont dans une plage de (A)/(B-PU) = 99/1 à 50/50, et
la résine polyuréthanne (B-PU) est obtenue par réaction de 60 à 95 % en poids d'un polyol aliphatique à chaîne droite (b-5) et de 5 à 20 % en poids d'un diisocyanate (b-6).

2. Dispersion aqueuse de résines polyuréthanne selon la revendication 1, dans laquelle ledit polyol aliphatique (b-5) est un polyester polyol à chaîne essentiellement droite produit par réaction d'au moins un acide carboxylique (b-1) choisi dans le groupe constitué par les acides dicarboxyliques aliphatiques à chaîne droite ayant de 2 à 10 atomes de carbone et l'ε-caprolactone, avec un diol aliphatique à chaîne droite (b-2) ayant de 2 à 6 atomes de carbone.

3. Dispersion aqueuse selon la revendication 1, dans laquelle la tension superficielle de la dispersion est inférieure ou égale à 40 mN/m.

4. Adhésif aqueux pour chaussures comprenant une dispersion aqueuse de résines polyuréthanne selon l'une quelconque des revendications 1 à 3.

5. Agent d'apprêt aqueux comprenant une dispersion aqueuse de résines polyuréthanne selon l'une quelconque des revendications 1 à 3.
